# EUROPÄISCHE PATENTSCHRIFT

(11) **EP 0 928 885 B1**
(45) Veröffentlichungstag und Bekanntmachung des Hinweises auf die Patenterteilung: **16.04.2003**
(21) Anmeldenummer: 99810005.1
(22) Anmeldetag: 06.01.1999
(51) Int. Cl.: F01N 7/10, F01N 3/28

(54) **Abgasvorrichtung für einen Verbrennungsmotor**
Exhaust gas device for an internal combustion engine
Dispositif d'échappement d'un moteur à combustion interne

(30) Priorität: 07.01.1998 CH 898; 07.05.1998 CH 898
(43) Veröffentlichungstag der Anmeldung: 14.07.1999
(73) Patentinhaber: SCAMBIA INDUSTRIAL DEVELOPMENTS AKTIENGESELLSCHAFT, 9494 Schaan (LI)
(72) Erfinder: Krüger, Klaus Gerhard, 52525 Waldfeucht-Haaren (DE)
(74) Vertreter: Eder, Carl E.

(56) Entgegenhaltungen:
- DE-A- 3 711 101
- DE-A- 4 324 458
- US-A- 3 902 853
- US-A- 4 188 783
- US-A- 4 420 933
- US-A- 5 212 949
- US-A- 5 351 483
- PATENT ABSTRACTS OF JAPAN vol. 007, no. 074 (M-203), 26. März 1983 (1983-03-26) & JP 58 002412 A (TOYOTA JIDOSHA KOGYO KK;OTHERS: 01), 8. Januar 1983 (1983-01-08)
- PATENT ABSTRACTS OF JAPAN vol. 098, no. 004, 31. März 1998 (1998-03-31) & JP 09 329020 A (YUTAKA GIKEN CO LTD), 22. Dezember 1997 (1997-12-22)

## Beschreibung

Die Erfindung betrifft eine Abgasvorrichtung für einen Verbrennungsmotor, mit einem Katalysator und mindestens zwei Zuleitungen zum Verbinden des Verbrennungsmotors mit dem Katalysator.

Beim Verbrennungsmotor kann es sich beispielsweise um einen Benzinmotor eines Personenkraftwagens oder sonstigen Strassen-Motorfahrzeugs handeln.

Eine aus der JP 58 002 412 A bekannte Abgasvorrichtung besitzt einen Katalysator und zwei Zuleitungen zum Verbinden eines Verbrennungsmotors mit dem Katalysator. Die Wände der Zuleitungen und des Katalysator-Gehäuses bestehen aus zwei Schalen. Bei dieser bekannten Vorrichtung gelangt das beim Betrieb vom Motor zum Katalysator strömende, heisse Abgas offenbar in direktem Kontakt mit den an die Umgebung angrenzenden Schalen. Diese werden daher insbesondere im Bereich der Zuleitungen und des Eingangsabschnitts des Gehäuses sehr heiss, wodurch auch ihre Abmessungen stark sowie örtlich unterschiedlich ändern. Es besteht daher eine erhebliche Gefahr, dass die Schalen Risse bekommen. Zudem ist es schwierig, Katalysatormittel ausreichend fest und ohne Beschädigung im Gehäuse zu halten. Ferner gibt das Abgas zwischen dem Motor und dem Katalysator viel Wärme an die Umgebung ab, so dass es bei einem Kalt-Start des Motors lange dauert, bis die Katalysatormittel die für eine wirkungsvolle Behandlung des Abgases erforderliche Temperatur erreichen. Zudem werden in der Nähe der Abgasvorrichtung angeordnete Teile stark erhitzt.

Die US 3 902 853 A offenbart eine Abgasvorrichtung mit einem äusseren Gehäuse und einem inneren Gehäuse. Das äussere Gehäuse besitzt zwei gegossene Gehäuseteile, die mit Schrauben miteinander verbundene Flansche aufweisen. Das innere Gehäuse weist zwei Schalen aus Blech auf. Der obere Gehäuseteil des äusseren Gehäuses weist einen Einlass mit einem Flansch auf, der an einem Verbrennungsmotor befestigt werden kann. Der Einlass enthält zur Bildung von Zuleitungen dienende, innere Rohre. Deren Durchgänge sind mit einem in der oberen Schale des inneren Gehäuses angeordneten Katalysatorbehälter verbunden. Zwischen dem äussern Gehäuse und dem inneren Gehäuse ist eine Isolation aus Asbest angeordnet. Die beiden gegossenen Gehäuseteile des äusseren Gehäuses haben dicke Wände und noch dickere, miteinander verschraubte Flansche. Das äussere Gehäuse ist daher schwer. Zudem ist das Verschrauben der Flansche mit Schrauben relativ zeitraubend und aufwendig.

Eine in Fig. 6 der US 5 351 483 A dargestellte Abgasvorrichtung besitzt zu einem Katalysator führende Zuleitungen und ein Katalysator-Gehäuse mit zwei einander umschliessenden Wänden aus Stahl und einer zwischen diesen vorhandenen Isoliermaterialschicht. Da die inneren Wände der Zuleitungen und des Gehäuses durch Isoliermaterial gegen aussen thermisch isoliert sind, werden sie beim Betrieb durch das Abgas stellenweise noch mehr erhitzt und gedehnt als die Wände der vorher diskutierten, aus der JP 58 002 412 A bekannten Vorrichtung. Es besteht daher eine erhebliche Gefahr, dass durch Temperaturänderungen Spannungen erzeugt werden, die Risse der Wände verursachen. Zudem dürfte es praktisch sehr schwierig sein, eine Vorrichtung herzustellen und zusammenzubauen, bei der die Wände entlang den Zuleitungen und dem Gehäuse sowie auch um die Zuleitungen und das Gehäuse herum überall zusammenhängen, wie es gemäss der Fig. 6 der US 5 351 483 A der Fall zu sein scheint.

Eine aus der US 4 188 783 A bekannte Abgasvorrichtung besitzt einen Auspuffkrümmer und zwei Katalysatorkörper. Einer der letzteren ist in einem auch den Auspuffkrümmer bildenden Gehäuse angeordnet. Das Gehäuse besteht aus gegossenen Teilen, die Flansche mit Löchern haben und offenbar miteinander verschraubt sind. Diese Abgasvorrichtung hat die Nachteile, dass das gegossene Gehäuse sehr schwer ist und wegen der Löcher aufweisenden Flanschen viel Platz beansprucht. Ferner braucht das Verschrauben der Flansche viel Zeit, wobei vermutlich auch noch eine Dichtung zwischen den Flanschen angeordnet werden muss. Das Gehäuse enthält als Zuleitungen dienende Rohre und einen mit diesen verbundenen Abgas-Sammler, wobei die Rohre und der Abgas-Sammler gemäss den Zeichnungen aus einem zusammenhängenden Körper zu bestehen scheinen. Es besteht jedoch eine grosse Gefahr, dass durch Temperaturänderungen verursachte Spannungen einen solchen Körper beschädigen.

Andere bekannte Abgasvorrichtungen besitzen einen Katalysator mit einem Gehäuse und einem Auspuffkrümmer mit mehreren doppelwandigen Zuleitungen. Die Herstellung des Gehäuses sowie der Zuleitungen und die Verbindung der letzten mit dem Gehäuse erfordern bei diesen bekannten Abgasvorrichtungen jedoch die Herstellung vieler, ursprünglich separater Teile und die Bildung zahlreicher Schweissverbindungen. Ferner beanspruchen solche Zuleitungen und deren Verbindung mit dem Katalysator viel Platz. Zudem können bei bekannten Auspuffkrümmern mit doppelwandigen Zuleitungen beim Betrieb bei den Verbindungen der sich stromabwärts befindenden Enden der äusseren und inneren Wände der Zuleitungen miteinander und mit dem Gehäuse des Katalysators grosse thermische Spannungen entstehen, die Risse verursachen können.

Der Erfindung liegt daher die Aufgabe zugrunde, eine Abgasvorrichtung mit einem Katalysator und mindestens zwei Zuleitungen zu schaffen, die ermöglicht, Nachteile der bekannten Abgasvorrichtungen zu vermeiden. Dabei wird insbesondere ausgehend von der JP 59 002 412 A angestrebt, dass die an die Umgebung angrenzenden Wände der Vorrichtung und vor allem der Zuleitungen durch das heisse Abgas nicht allzusehr erhitzt werden und dass die Wände sowie die sonstigen Teile der Vorrichtung nicht durch Temperaturänderungen und die dadurch verursachten Abmessungsänderungen und/oder Spannungen beschädigt werden. Ferner soll ermöglicht werden, dass möglichst wenig separate Einzelteile hergestellt und dann dicht miteinander verbunden werden müssen und dass die Abgasvorrichtung bei der serienmässigen Fabrikation schnell und wirtschaftlich hergestellt werden kann.

Diese Aufgabe wird gemäss der Erfindung durch eine Abgasvorrichtung mit den Merkmalen des Anspruchs 1 gelöst.

Vorteilhafte Weiterbildungen des Erfindungsgegenstandes gehen aus den abhängigen Ansprüchen hervor.

Der Erfindungsgegenstand wird nachfolgend anhand in der Zeichnung dargestellter Ausführungsbeispiele näher erläutert. In der Zeichnung zeigt,
Fig. 1 eine schematische Schrägansicht eines Verbrennungsmotors mit einer Abgasvorrichtung, die einen Auspuffkrümmer mit drei doppelwandigen Zuleitungen und einem Katalysator aufweist,
Fig. 2 einen Längsschnitt durch die Abgasvorrichtung entlang der Linie II - II der Fig. 1,
Fig. 3 eine Schrägansicht mit Blickrichtung auf die untere Seite der Abgasvorrichtung,
Fig. 4 eine Schrägansicht der Abgasvorrichtung von oben, wobei die obere Schale des Gehäuses und der Zuleitungen weggelassen wurde,
Fig. 5 eine Seitenansicht der Abgasvorrichtung, wobei die obere Schale und einige andere Teile in der oberen Hälfte der Vorrichtung geschnitten sind,
Fig. 6 einen Querschnitt durch die Abgasvorrichtung entlang der Linie VI - VI der Fig. 2 in grösserem Massstab,
Fig. 7 einen Querschnitt durch einen Bereich des Katalysators entlang der Linie VII - VII der Fig. 2 in grösserem Massstab,
Fig. 8 eine Schrägansicht einer Abgasvorrichtung mit einem vier Zuleitungen aufweisenden Auspuffkrümmer,
Fig. 9 einen zur Fig. 8 analogen Längsabschnitt durch eine andere Abgasvorrichtung,
Fig. 10 einen Längsschnitt durch eine andere Abgasvorrichtung und
Fig. 11 noch eine andere, teils in Seitenansicht und teils im Längsschnitt dargestellte Abgasvorrichtung.

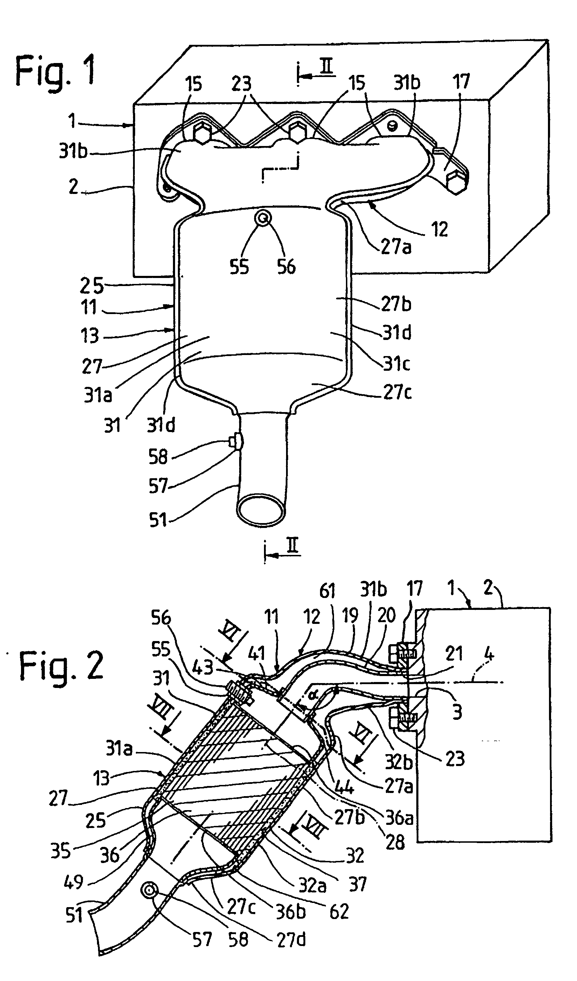

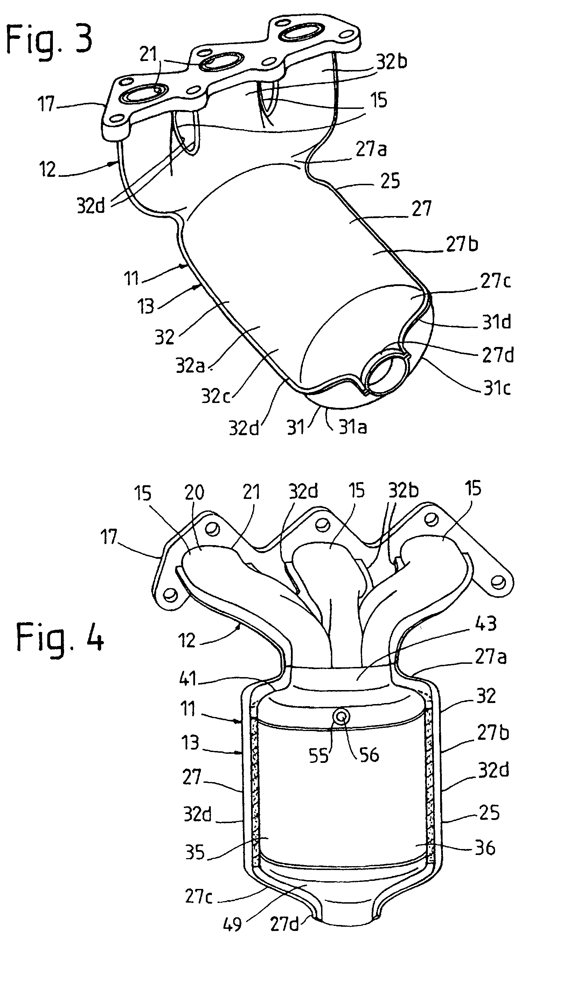

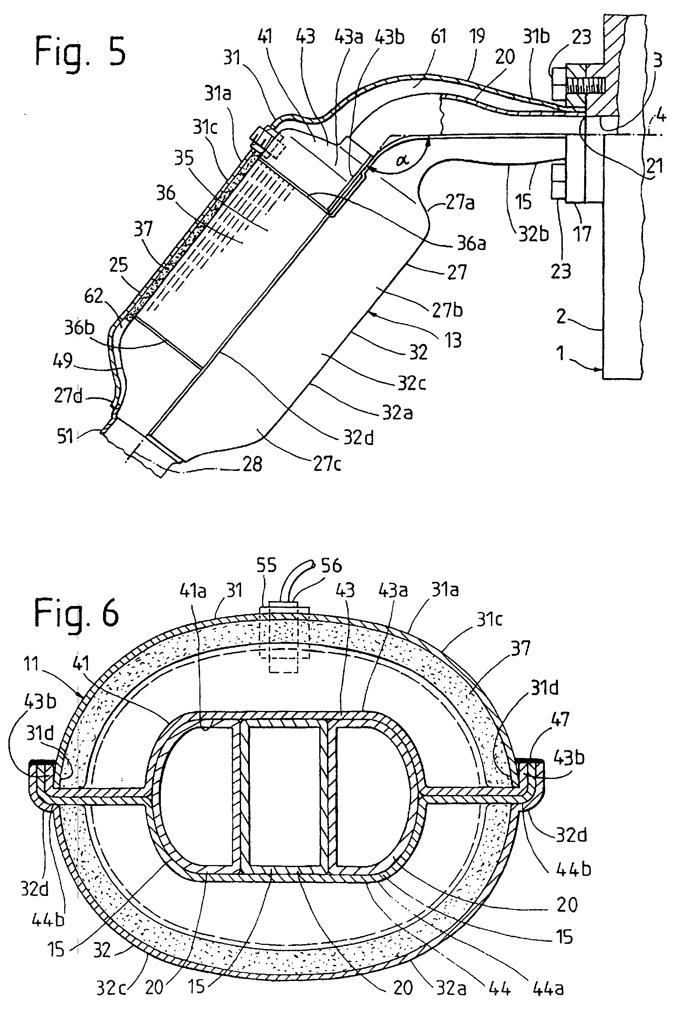

Der schematisch in den Figuren 1, 2 und 5 gezeichnete Benzin-Verbrennungsmotor 1 beisitzt ein Motorgehäuse 2, mehrere Zylinder und mindestens zwei, nämlich beispielsweise drei Abgasausgänge 3 mit je einer Öffnung. Jeder Abgasausgang 3 definiert eine gerade Achse 4. Die Achsen 4 der verschiedenen Abgasausgänge 3 sind parallel zueinander und liegen beispielsweise in einer gemeinsamen Ebene. Die Achsen 4 sind in den Figuren 2 und 5 horizontal gezeichnet, können jedoch auch vom Motorgehäuse weg nach unten geneigt sein. Eine Abgasanlage weist eine auch separat in den Figuren 3, 4 und 6 ersichtliche Abgasvorrichtung 11 mit einem Auspuffkrümmer 12 und einem Katalysator 13 auf.

Der Auspuffkrümmer 12 hat mindestens zwei und nämlich drei in ihren Längsrichtungen mindestens teil- und stellenweise gebogene Zuleitungen 15 zum Verbinden der Abgasausgänge 3 mit dem Katalysator 13. Der Auspuffkrümmer 12 weist einen für alle Zuleitungen 15 gemeinsamen Anschlussflansch 17 auf. Dieser besitzt für jede Zuleitung 15 eine beispielsweise kreisförmige Öffnung. Die Zuleitungen 15 sind im wesentlichen doppelwandig und haben eine äussere Wand 19 und eine innere Wand 20. Die Wände 19, 20 der Zuleitungen haben im Querschnitt kreisförmige in die genannten Öffnungen des Anschlussflanschs hineinragende Endabschnitte. Diese liegen dort aneinander und an den Begrenzungen der Öffnungen an und sind dicht sowie starr miteinander und mit dem Anschlussflansch verbunden. Die Öffnungen des Anschlussflanschs und die in diese hineinragenden Wände der Zuleitungen bilden zusammen die Abgaseingänge 21 der Zuleitungen. Der Anschlussflansch 17 ist mit Befestigungsmitteln 23, nämlich mit zum Teil in Fig. 1 sowie in den Figuren 2 und 5 gezeichneten, Durchgangslöcher des Anschlussflanschs durchdringenden Schrauben lösbar am Motorgehäuse 2 befestigt.

Der Katalysator besitzt ein Gehäuse 25 mit einer Gehäuse-Wand 27. Diese hat in der Strömungsrichtung des Abgases der Reihe nach einen Eingangsabschnitt 27a, einen Hauptabschnitt 27b, einen Ausgangsabschnitt 27c und einen Kragen 27d. Der Hauptabschnitt 27b ist im wesentlichen parallel zu einer von ihm definierten, geraden Achse 28 sowie im allgemeinen zylindrisch und im Querschnitt beispielsweise im allgemeinen ungefähr oval und/oder elliptisch. Der Eingangsabschnitt 27a verbindet die drei Zuleitungen 15 mit dem Hauptabschnitt 27b und erweitert sich beispielsweise in mindestens einem Längsschnitt zum Hauptabschnitt 27b hin. Der Ausgangsabschnitt 27c ist im allgemeinen trichterförmig und verjüngt sich vom Hauptabschnitt 27b weg. Der Kragen 27d hat einen kreisförmigen Umriss, ist im wesentlichen zylindrisch und/oder leicht konisch und begrenzt eine kreisförmige Öffnung. Die Achse 28 bildet mit der Achse 4 einen Winkel α, der mindestens 90°, höchstens 180° und beispielsweise 100° bis 150° beträgt.

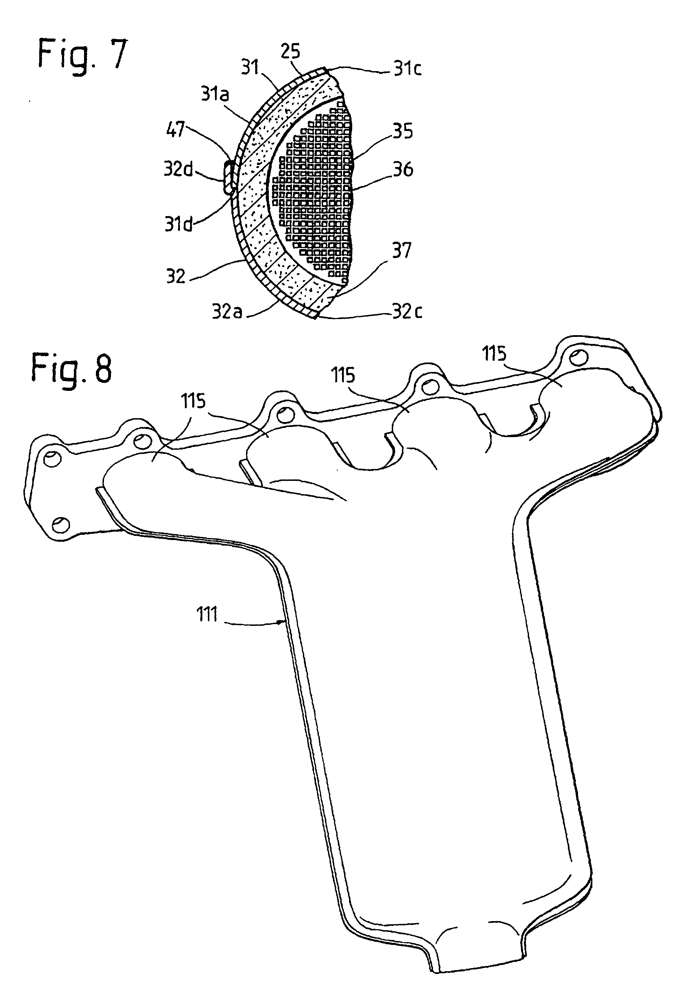

Die Abschnitte 27a, 27b, 27c, 27d der Gehäuse-Wand 27 und die äusseren Wände 19 aller Zuleitungen 15 sind zusammen aus Abschnitten einer ersten, oberen Schale 31 und einer zweiten, unteren Schale 32 gebildet. Jede dieser Schalen 31, 32 besteht aus einem einstückigen metallischen Körper. Jede dieser Schalen bildet im Querschnitt ungefähr eine Hälfte der Abschnitte 27a, 27b, 27c, 27d der Gehäuse-Wand 27 und auch ungefähr eine Hälfte der äusseren Wände 19 der drei Zuleitungen 15. Jede Schale 31, 32 hat einen im Querschnitt lückenlos zusammenhängenden Hauptabschnitt 31a bzw. 32a, der ungefähr die Hälfte der Gehäuse-Wand 27 und einen Bereich der äusseren Wände 19 der mit der Gehäuse-Wand 27 verbundenen Endabschnitte der Zuleitungen 15 bildet. Jede Schale 31, 32 hat ferner drei sich von ihrem Hauptabschnitt 31a bzw. 32a bis zum Anschlussflansch 17 erstreckende, fingerförmige Abschnitte 31b bzw. 32b, die im Querschnitt durch freie Zwischenräume voneinander getrennt und je einer der Zuleitungen 15 zugeordnet sind. Die Hauptabschnitt 31a, 32a und die fingerförmigen Abschnitte 31b, 32b der Schale 31 bzw. 32 haben je einen im Querschnitt gewölbten und mindestens stellenweise gebogenen Mittelabschnitt 31c bzw. 32c und Randabschnitte 31d bzw. 32d. Die Randabschnitte 32d der zweiten Schale 32 sind gemäss den Figuren 6 und 7 ungefähr L-förmig abgewinkelt oder abgebogen. Die Randabschnitte 31d der ersten Schale 31 schliessen dagegen ungefähr stetig sowie glatt an die gewölbten Mittelabschitte 31c an und ragen in die von L-förmigen Randabschnitten 32d gebildeten Winkel oder Kehlen hinein.

Der Hauptabschnitt 27b der Gehäuse-Wand umschliesst im Querschnitt Katalysatormittel 35 zur katalytischen Behandlung und Reinigung des Abgases. Die Katalysatormittel 35 besitzen beispielsweise einen im Querschnitt ungefähr ovalen und/oder elliptischen, im wesentlichen zylindrischen Katalysatorkörper 36 mit einer Abgaseintrittsfläche 36a sowie einer Abgasaustrittsfläche 36b. Die Flächen 36a, 36b sind eben und rechtwinklig zur Achse 28. Der Katalysatorkörper besitzt beispielsweise ein Substrat aus Keramik mit einer Vielzahl von axialen Durchgängen für das Abgas. Die die Durchgänge begrenzenden Flächen des Substrats sind mit Überzügen versehen, die zum grössten Teil aus porösem Aluminiumoxid bestehen und ferner mindestens ein katalytisch aktives Material, beispielsweise Platin und Iridium aufweisen.

Das Gehäuse 25 enthält ferner eine hitzebeständige Zwischenlage 37, die zwischen der Aussenfläche des Katalysatorkörpers 36 und der Innenfläche des Hauptabschnitts 27b des Gehäuse-Wand angeordnet ist, den Katalysatorkörper im Querschnitt umschliesst sowie Schwingungsdämpfern hält und bei beiden Enden von diesem in axialer Richtung ein wenig über diesen hinausragt. Die Zwischenlage 37 besteht aus einem bis mindestens zur Betriebstemperatur der Katalysatormittel hitzebeständigen, wärmeisolierenden und beispielsweise elastisch deformierbaren, insbesondere radial komprimierbaren, schichtförmigen Material. Die Zwischenlage 37 besteht zum Beispiel aus einer Matte mit anorganischen Fasern, mineralischen Plättchen, die bei der ersten Erhitzung aufgebläht werden, und einem Bindemittel. Die Zwischenlage könnte jedoch auch mindestens eine Lage eines Drahtgeflechts oder Drahtgewirkes und ein wärmeisolierendes Füllmaterial aufweisen.

Das Gehäuse 25 enthält ferner eine trichterförmige Eingangs-Innenwand 41, die als Abgas-Sammler und -Verteiler dient und sich zum grössten Teil innerhalb des Eingangsabschnitts 27a des Gehäuses befindet. Die Eingangs-Innenwand 41 hat am sich entlang dem Strömungsweg näher beim Anschlussflansch 17 befindenden Ende einen kurzen, ungefähr zylindrischen Endabschnitt mit einer besonders deutlich in Fig. 6 ersichtlichen Eintrittsöffnung 41a. Diese hat einen länglichen, mehr oder weniger rechteckförmigen Umriss, wobei die schmäleren Rechteckseiten mindestens zum Teil durch Bogen ersetzt sind. Die trichterförmige Eingangs-Innenwand hat ferner einen sich in der Strömungsrichtung erweiternden Mittelabschnitt und an ihrem sich stromabwärts befindenden Ende einen, kurzen im wesentlichen zylindrischen, im Querschnitt ungefähr ovalen und/oder elliptischen Endabschnitt mit einer Austrittsöffnung. Dieser Endabschnitt erstreckt sich bis mindestens annähernd zur Abgaseintrittsfläche des Katalysatorkörpers 36, hat eine mindestens ungefähr mit der Mantel- oder Umfangsfläche des Katalysatorkörpers fluchtende Aussenfläche und wird mindestens zum Teil von der Zwischenlage 37 umschlossen. Die Eingangs-Innenwand 41 besteht aus einer ersten Schale 43 und einer zweiten Schale 44. Jede Schale 43, 44 besteht aus einem einstückigen, metallischen Körper, d.h. Blechteil und bildet mindestens ungefähr eine Hälfte der Eingangs-Innenwand 41. Jede Schale 43, 44 hat einen im Querschnitt gewölbten Mittelabschnitt 43a bzw. 44a und bei beiden axialen Längsrändern von diesem einen Randabschnitt 43b bzw. 44b. Diese Randabschnitte und/oder Randflansche sind im Querschnitt im wesentlichen L-förmig. Wie es in Fig. 6 ersichtlich ist, umgreifen die L-förmigen Randabschnitte 32d, 44b, 43b einander. Die Randabschnitte 31d der Schale 31 ragen in die von den Randabschnitten 43b gebildeten Kehlen hinein. Die Eingangs-Innenwand 41 und der im Querschnitt von ihr umschlossene Innenraumbereich oder Durchgang haben eine mindestens annähernd mit der Achse 28 zusammenfallende Mittelachse.

Die innere Wand 20 jeder Zuleitung 15 besteht aus einem einstückigen, mindestens stellenweise gebogenen Rohr. Der Anschlussflansch 17, die inneren Wände 20 und die Schalen 31, 32, 43, 44 bestehen alle aus einem metallischen Material beispielsweise Stahl. Die äusseren und inneren Wände 19, 20 der Zuleitungen sind mit dem Anschlussflansch verschweisst. Die beiden Schalen 31, 32 sind bei ihren Randabschnitten 31d, 32d durch in den Figuren 6 und 7 ersichtliche Schweissverbindungen 47 fest und dicht miteinander verbunden. Bei dem die Eingangs-Innenwand 41 enthaltenden Längsbereich des Gehäuses 27 verbinden die Schweissverbindungen 47 auch die Randabschnitte der Schalen 43, 44 der Eingangs-Innenwand 41 mit den Randabschnitten der Schalen 31, 32 des Gehäuses.

Der in die Eintrittsöffnung 41a der Eingangs-Innenwand 41 hineinragenden Endabschnitt der inneren Wand 20 der mittleren Zuleitung 15 ist gemäss der Fig. 6 im wesentlichen viereckförmig, d. h. rechteck- oder quadratförmig und hat vier im wesentlichen ebene Wandabschnitte. Die in die Eintrittsöffnung 41a hineinragenden Endabschnitte der inneren Wände 20 der beiden äusseren Zuleitungen 15 haben ebene und gebogene Wandabschnitte. Die inneren Wände 20 liegen in dem von der Eingangs-Innenwand 41 begrenzten Innenraumbereich mit ebenen Wandabschnitten paarweise aneinander an und passen mindestens annähernd spielfrei in die Eintrittsöffnung 41a hinein, so dass sie diese zusammen im Querschnitt mindestens annähernd ausfüllen und eine annähernd dichte Verbindung der Innenwände 20 der Zuleitungen 15 mit der Eingangs-Innenwand 41 ergeben. Die in die Eintrittsöffnung 41a hineinragenden Endabschnitte der inneren Wände 20 sind jedoch in ihrer Längsrichtung bezüglich der Eingangs-Innenwand 41 verschiebbar.

Das Gehäuse 25 enthält noch eine im allgemeinen trichterförmige Ausgangs-Innenwand 49. Diese ist stromabwärts von den Katalysatormitteln 35 angeordnet und befindet sich zum grössten Teil im Ausgangsabschnitt 27c der Gehäuse-Wand 27. Die Ausgangs-Innenwand 49 hat an ihrem sich stromaufwärts befindenden Ende einen kurzen, im Querschnitt ungefähr ovalen und/oder elliptischen Endabschnitt, der mindestens annähernd an den Katalysatorkörper 36 anschliesst, eine ungefähr mit dessen Mantel- und/oder Umfangsfläche fluchtende Aussenfläche hat und mindestens zum Teil von der Zwischenlage 37 umschlossen ist. An diesen zylindrischen Endabschnitt schliesst ein sich verjüngender Mittelabschnitt an, auf den ein kurzer, im Querschnitt kreisförmiger, ungefähr zylindrischer Endabschnitt folgt, der sich ungefähr bis zum stromabwärts angeordneten Ende des Gehäuses erstreckt, eine kreisförmige Öffnung begrenzt und zusammen mit dem Kragen 27d den für alle Zuleitungen gemeinsamen Abgasausgang des Katalysators bildet. Die Innenwand 49 besteht aus einem einstückigen Körper aus einem metallischen Material, nämlich Stahl. Eine aus einem Rohr aus einem metallischen Material, nämlich Stahl, bestehende Ableitung 51 übergreift das sich stromabwärts befindende Ende der Ausgangs-Innenwand 49 und ist dicht sowie fest mit der Ausgangs-Innenwand 49 und dem durch Abschnitte der beiden Schalen 31, 32 gebildeten Kragen 27d verbunden, nämlich verschweisst.

Eine metallische, aus Stahl bestehende Buchse 55 besitzt ein axiales, durchgehendes Loch mit einem Innengewinde, ragt durch stromaufwärts von den Katalysatormitteln 35 angeordnete Löcher der Schalen 31 und 43 hindurch und ist dicht mit diesen Schalen verschweisst. Eine Lambdasonde 56 ist in das Innengewinde der Buchse 55 eingeschraubt und ragt durch diese hindurch in den von der Eingangs-Innenwand 41 umschlossenen Innenraumbereich hinein. Eine Buchse 57 ist stromabwärts von den Katalysatormitteln 35 in ein Loch der Ableitung 51 eingeschweisst und hat ebenfalls ein axiales Durchgangsloch mit einem Innengewinde, in das eine in die Ableitung 51 hineinragende Lambdasonde 58 eingeschraubt ist.

Die inneren Wände 20 der Zuleitungen 15 sind von den äusseren Wänden 19 der Zuleitungen im wesentlichen und zum grössten Teil - d.h. abgesehen von ihren mit dem Anschlussflansch verbundenen Endabschnitten - durch einen zusammenhängenden Zwischenraum 61 getrennt. Der Zwischenraum 61 trennt auch den grössten Teil der trichterförmigen Eingangs-Innenwand 41 von der durch Abschnitte der Schalen 31, 32 gebildeten Wandung des Gehäuses 27. Die trichterförmige Ausgangs-Innenwand 49 ist im wesentlichen und zum grössten Teil durch einen Zwischenraum 62 von der durch Abschnitte der Schalen 31, 32 gebildeten Wandung des Gehäuses getrennt. Die Zwischenräume 61, 62 sind im wesentlichen frei sowie hohl und enthalten im wesentlichen stillstehende Luft und/oder im wesentlichen stillstehendes Abgas.

Bei der Herstellung der Abgasvorrichtung 11 werden zur Bildung der Schalen 31, 32, 43, 44 und der Ausgangs-Innenwand 49 dienende, ebene Blechteile zugeschnitten, beispielsweise ausgestanzt. Diese Blechteile werden dann durch plastisches Umformen beispielsweise mindestens zum Teil durch Tiefziehen, derart umgeformt, dass sie die gewünschten Formen erhalten.

Die inneren Wände 20 der Zuleitungen 15 werden zum Beispiel aus ursprünglich geraden, im Querschnitt kreisförmigen Rohren gebildet. Diese Rohre werden dann durch plastisches Umformen in die gewünschten Formen gebracht. Die Rohre können beispielsweise entlang ihren Achsen gebogen und bei ihren bei der fertigen Abgasvorrichtung 11 in die trichterförmige Eingangs-Innenwand 41 hineinragenden Endabschnitten durch plastisches Umformen auf die vorgesehenen Querschnittsformen gebracht werden. Die inneren Wände 20 können jedoch stattdessen auch aus ursprünglich einen kleineren Durchmesser aufweisenden Rohren gebildet werden, die zuerst ungefähr in die gewünschte Form gebogen, danach in Form-Werkzeuge bzw. Matrizen eingebracht und im sogenannten Innenhochdruck-Umformverfahren durch eine in die Rohre hineingepumpte Flüssigkeit erweitert und in die durch Form-Werkzeuge bzw. Matrizen festgelegten Formen gebracht werden.

Zum Zusammenbauen einer Abgasvorrichtung 11 können zum Beispiel die inneren Wände 20, die erste Schale 43 der Eingangs-Innenwand 41, die Buchse 55, die von der Zwischenlage 37 umhüllten Katalysatormittel 35 und die beispielsweise schon mit der Ableitung 51 verschweisste Ausgangs-Innenwand 49 in die erste Schale 31 des Gehäuses eingesetzt werden. Die Buchse 55 wird während oder nach diesem Zusammensetz-Vorgang mindestens mit der zur Eingangs-Innenwand 41 gehörenden Schale 43 und eventuell auch schon mit der zum Gehäuse gehörenden Schale 31 verschweisst. Nach dem Verschweissen der Buchse 55 mit der ersten Schale 43 wird auch die zweite Schale 44 der Eingangs-Innenwand 41 ein- und/oder aufgesetzt und das Gehäuse 25 durch Aufsetzen der zweiten Schale 32 geschlossen. Danach werden die vier Schalen 31, 32, 43, 44 bei den Randabschnitten 31d, 32d, 43b, 44b dicht miteinander verschweisst, wobei die Schweissverbindungen 47 gebildet werden. Des weiteren werden noch die Wände 19, 20 der Zuleitungen 15 mit dem Anschlussflansch 17 und die Ableitung 51 mit den Schalen 31, 32 verschweisst. Ferner werden die Buchsen 55, 57 mit der Schale 31 bzw. Ableitung 51 verschweisst, falls dies nicht bereits vorher geschehen ist.

Die Abgasvorrichtung 11 und insbesondere die äusseren Wände der Zuleitungen 15 sowie das Gehäuse 25 können also bei der serienmässigen Fabrikation aus relativ wenig ursprünglich separaten Teilen gebildet und schnell, einfach sowie wirtschaftlich zusammengebaut werden. Dabei müssen insbesondere auch nur relativ wenig Schweissverbindungen gebildet werden.

Der Ausgang des Katalysators 13 kann über die Ableitung 51 mit weiteren Teilen einer Abgasanlage, insbesondere mit mindestens einem Schalldämpfer verbunden werden. Wenn der Anschlussflansch 17 der Abgasvorrichtung lösbar und dicht am Motorgehäuse 2 befestigt ist und der Verbrennungsmotor 1 beim Betrieb heisses Abgas erzeugt, strömt dieses stossweise bei den Abgaseingängen 21 in die von inneren Wänden 20 der Zuleitungen 15 begrenzten Durchgänge. Das Abgas strömt danach durch diese Durchgänge und den von der Eingangs-Innenwand 41 begrenzten, sich in der Strömungsrichtung erweiternden Innenraumbereich und/oder Durchgang zur Abgaseintrittsfläche 36a des Katalysatorkörpers 36 der Katalysatormittel 35. Die trichterförmige Eingangs-Innenwand 41 dient dabei als Abgas-Sammler und -Verteiler, sammelt das stossweise abwechselnd durch die verschiedenen Zuleitungen 15 in das Gehäuse 25 einströmende Abgas und verteilt dieses auf die Abgaseintrittsfläche 36a des Katalysatorkörpers 36. Die Eingangs-Innenwand leitet das Abgas dabei im allgemeinen und insbesondere im zentralen Bereich, d.h. in der Umgebung der Achse 28, parallel zu dieser sowie ungefähr rechtwinklig zur Abgaseintrittsfläche 36a gegen die letztere. Das Abgas strömt danach durch die Durchgänge des Katalysatorkörpers hindurch und wird dabei katalytisch behandelt und gereinigt. Das bei der Abgasaustrittsfläche 36b des Katalysatorkörpers 36 aus diesem ausströmende Abgas strömt danach durch den sich in der Strömungsrichtung verjüngenden Innenraumbereich oder Durchgang der trichterförmigen Ausgangs-Innenwand 49 zur Ableitung 51. Die beiden Lambdasonden 56 und 58 können den Sauerstoffgehalt des Abgases stromaufwärts bzw. stromabwärts von den Katalysatormitteln 35 messen.

Die kompakte Ausbildung der Abgasvorrichtung 11 ermöglicht, den Katalysator 13 nahe beim Verbrennungsmotor 1 anzuordnen und durch relativ kurze Zuleitungen mit diesem zu verbinden. Der Luft und/oder mehr oder weniger ruhendes Abgas enthaltende Zwischenraum 61 isoliert die das strömende Abgas führenden, inneren Wände 20 der Zuleitungen 15 und die Eingangs-Innenwand 41 thermisch gegen die Schalen 31, 32. Das Abgas gibt daher zwischen dem Anschlussflansch 17 und den Katalysatormitteln 35 nur wenig Wärme an die Umgebung ab und wird dementsprechend zwischen dem Verbrennungsmotor und dem Katalysatormitteln nur wenig abgekühlt. Dies ergibt bei einem Kalt-Start den Vorteil, dass die ursprünglich die'Umgebungstemperatur aufweisenden Katalysatormittel rasch auf die für eine wirkungsvolle katalytische Behandlung und Reinigung des Abgases erforderliche Temperatur erhitzt werden. Der Katalysatorkörper 36 und die Ausgangs-Innenwand 49 werden durch die Zwischenlage 37 sowie den Luft und/oder stillstehendes Abgas enthaltenden Zwischenraum 62 thermisch gegen die Schalen 31, 32 des Gehäuses isoliert. Die äusseren Wände 19 der Zuleitungen 15 und die Wandung des Gehäuses 25 bleiben daher verhältnismässig kühl, so dass nötigenfalls hitzeemfindliche Teile relativ nahe bei der Abgasvorrichtung 11 angeordnet werden können. Im übrigen beansprucht die kompakt ausgebildete Abgasvorrichtung 11 nur wenig Platz.

Das beim Betrieb der Abgasvorrichtung durch diese hindurch geleitete, heisse Abgas verursacht eine vorübergehende Erhitzung und Dehnung der verschiedenen Teile der Abgasvorrichtung. Die durch unterschiedliche Temperaturänderungen verursachten, unterschiedlichen Längenänderungen der äusseren Wände 19 und der inneren Wände 20 der Zuleitungen 15 können dabei durch die verschiebbare Verbindung der inneren Wände 20 mit der Eingangs-Innenwand 41 ausgeglichen werden, ohne dass nennenswerte Spannungen entstehen. Zwischen dem von der Zwischenlage 37 im Gehäuse 25 gehaltenen Katalysatorkörper 36 und den diesem zugewandten Enden der Innenwände 41 und 49 sind bei kaltem Katalysator vorzugsweise schmale Zwischenräume vorhanden. Diese können durch vorübergehende Temperaturerhöhungen verursachte Längenänderungen des Katalysatorkörpers 36 und vor allem der Innenwände 41, 49 aufnehmen, ohne Spannungen zu erzeugen. Die Temperaturänderungen verursachen dementsprechend keine Risse oder Brüche von irgendwelchen Wänden oder sonstigen Teilen.

Die in der Fig. 8 ersichtliche Abgasvorrichtung 111 ist weitgehend ähnlich wie die Abgasvorrichtung 11 ausgebildet, unterscheidet sich jedoch von dieser dadurch, dass sie vier doppelwandige Zuleitungen 115 hat. Ferner ist die nicht sichtbare Eingangs-Innenwand eventuell nur in einigen und nicht in allen Längsschnitten trichterförmig, so dass ihr Mittelabschnitt sich dementsprechend nur in einigen Längsschnitten zu den Katalysatormitteln hin erweitert.

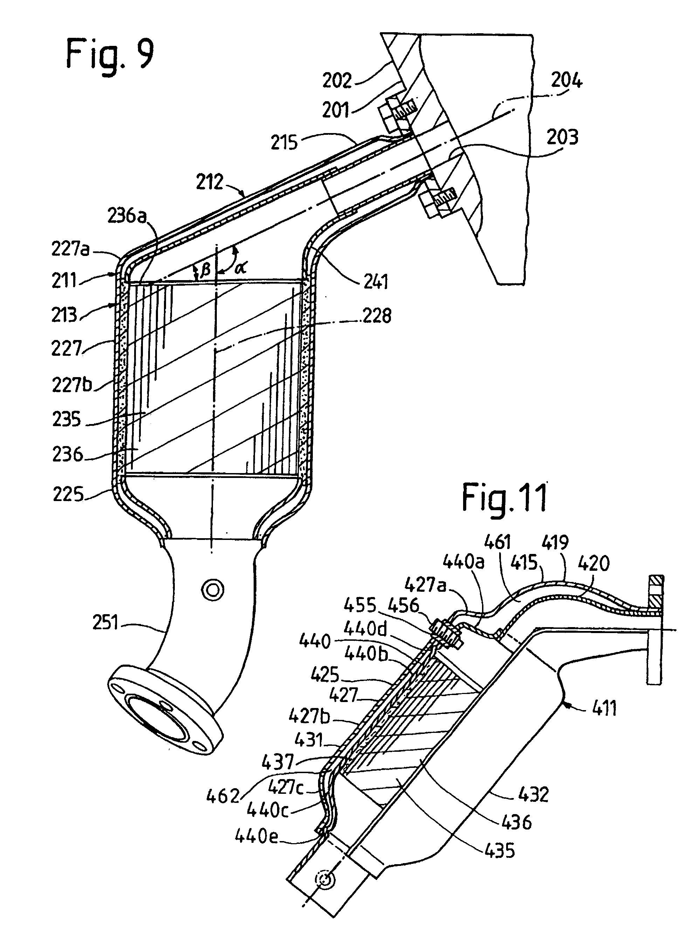

Der teilweise in Fig. 9 ersichtliche Benzin-Verbrennungsmotor 201 ist beispielsweise als V-Motor ausgebildet und hat ein Motorgehäuse 202 mit mehreren Abgasausgängen 203, die zueinander parallele, vom Motor weg nach unten geneigte Achsen 204 haben. Die ebenfalls in Fig. 9 ersichtliche Abgasvorrichtung 211 besitzt einen Auspuffkrümmer 212 mit doppelwandigen Zuleitungen 215 und einem Katalysator 213 mit einem Gehäuse 225. Dieses hat eine Gehäuse-Wand 227 mit einem Eingangsabschnitt 227a und einem Hauptabschnitt 227b. Der letztere definiert eine gerade, beispielsweise fast oder genau vertikale Achse 228, die mit den Achsen 204 einen Winkel a im Bereich von etwa 100° bis 150° bildet. Der Hauptabschnitt 227b enthält Katalysatormittel 235 mit einem Katalysatorkörper 236. Dieser hat eine ebene, zur Achse 228 rechtwinklige Abgaseintrittsfläche 236a. Diese bildet mit den zueinander parallelen Achsen 204 einen Winkel β, der 90° kleiner als der Winkel α ist, dementsprechend ungefähr im Bereich von 10° bis 60° liegt und zum Beispiel ungefähr 15° und 45° beträgt. Das Gehäuse 225 enthält eine stromaufwärts vom Katalysatorkörper angeordnete Eingangs-Innenwand 241.

Die Abgasvorrichtung 211 ist im allgemeinen ähnlich ausgebildet wie die Abgasvorrichtung 11, unterscheidet sich von dieser jedoch dadurch, dass der Eingangsabschnitt 227a der Gehäuse-Wand 227 und die Eingangs-Innenwand 241 im gezeichneten Axialschnitt derart gebogen und/oder abgewinkelt sind, dass sie teilweise mehr oder weniger entlang einer geraden, zu den Achsen 204 parallelen Achse verlaufen und/oder eine solche Achse definieren. Bei der Verwendung der Abgasverrichtung 211 strömt das Abgas dementsprechend im allgemeinen und insbesondere im mittleren Querschnittsbereich des von der Innenwand 241 begrenzten Innenraumbereiches und/oder Durchgangs mehr oder weniger parallel zu den Achsen 204 gegen die Abgaseintrittsfläche 236a. Das Abgas hat also in einem sich geringfügig stromaufwärts von der Abgaseintrittsfläche 236a befindenden Innenraumbereich im allgemeinen und zu einem grossen Teil eine Strömungsrichtung, die gegen die Abgaseintrittsfläche 236a geneigt ist und mit dieser ungefähr den von 90° verschiedenen Winkel β bildet. Dies trägt zu einer gleichmässigen Verteilung des Abgases auf die Abgaseintrittsfläche 236a und die Durchgänge des Katalysatorkörpers 236 bei. Das sich stromabwärts befindende Ende des Gehäuses ist mit einer Ableitung 251 versehen, die ein kurzes Rohrstück und einen Flansch für die lösbare Verbindung mit dem nachfolgenden Teil der Abgasanlage aufweist.

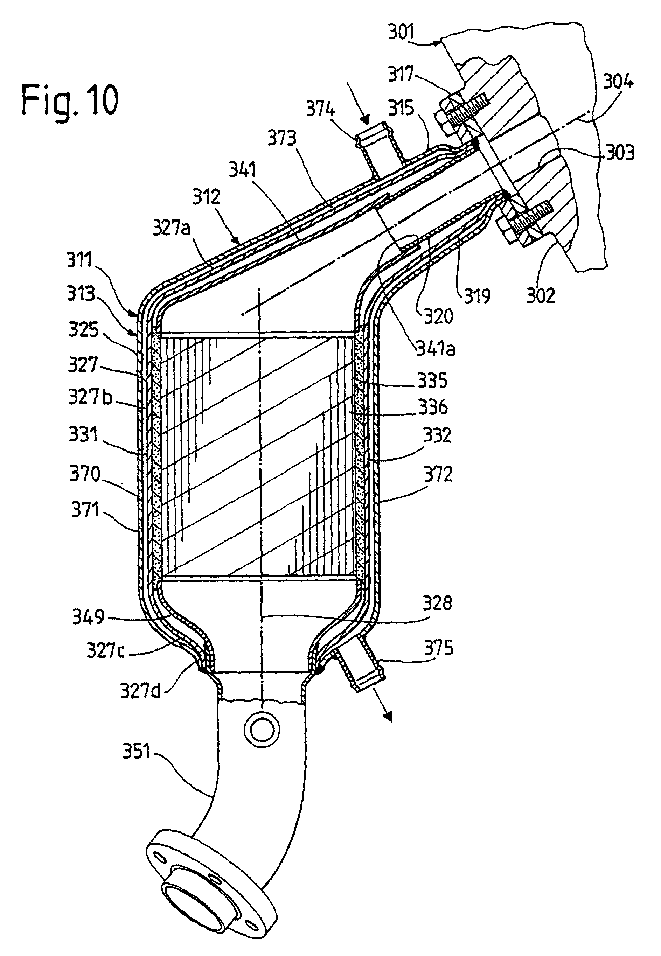

Der teilweise in Fig. 10 dargestellte Benzin-Verbrennungsmotor 301 hat ein Motorgehäuse 302 mit Abgasausgängen 303, deren Durchgänge in der Abgas-Strömungsrichtung nach unten geneigt sind und Achsen 304 definieren. Die ebenfalls in Fig. 10 ersichtliche Abgasvorrichtung 311 weist einen Auspuffkrümmer 312 und einen Katalysator 313 auf. Der Auspuffkrümmer 312 besitzt mehrere Zuleitungen 315 und einen für diese gemeinsamen Anschlussflansch 317. Jede Zuleitung hat eine äussere Wand 319 und eine innere Wand 320. Der Katalysator 313 weist ein Gehäuse 325 mit einer Gehäuse-Wand 327 auf. Diese besitzt entlang dem Abgas-Strömungsweg der Reihe nach einen Eingangsabschnitt 327a, einen Hauptabschnitt 327b, einen Ausgangsabschnitt 327c und einen Kragen 327d. Die Abgasvorrichtung 311 weist wiederum zwei einstückige, miteinander verschweisste Schalen 331, 332 auf, von denen jede ungefähr die Hälfte der äusseren Wände 319 der Zuleitungen 315 und die Abschnitte 327a bis 327d der Gehäuse-Wand 327 bildet. Der Hauptabschnitt 327b der Gehäuse-Wand 327 definiert eine gerade Achse 328 und enthält Katalysatormittel 335 mit einem Katalysatorkörper 336, eine Eingangs-Innenwand 341 und eine Ausgangs-Innenwand 349. Die Eingangs-Innenwand 341 hat an ihrem dem Motorgehäuse 302 sowie dem Anschlussflansch 317 zugewandten Ende einen kurzen, meistens annähernd zu den Achsen 304 parallelen, eine Eintrittsöffnung 341a begrenzenden Endabschnitt. Die inneren Wände 320 der Zuleitungen 315 bestehen wie bei der Abgasvorrichtung gemäss Fig. 9 aus kurzen, geraden Rohren und ragen möglichst genau passend, parallel zu ihren Längsrichtungen und zu den Achsen 304 verschiebbar durch die Eintrittsöffnung 341a in dem von der Eingangs-Innenwand 341 umschlossenen Innenraumbereich hinein. Der Ausgang des Katalystors ist mit einer Ableitung 351 verbunden.

Die Abgasvorrichtung 311 besitzt zusätzlich zu auch bei den Abgasvorrichtungen 11, 111, 211 vorhandenen Wänden und sonstigen Teilen noch einen Kühl-Mantel 370. Dieser erstreckt sich mindestens über die grössten Teile der Längen der Zuleitungen 315 und des Gehäuses 325. Der Kühl-Mantel 370 erstreckt sich nämlich vom Anschlussflansch 317 bis zum Ausgang des Katalysators 313, d.h. bis zum Kragen 327d des Gehäuses 327, und also im wesentlichen über die gesamte Länge der Zuleitungen sowie des Gehäuses. Der Kühl-Mantel 370 bildet sowohl Kühl-Wände der Zuleitungen 315 als auch Kühl-Wände des Gehäuses 325 und umschliesst im Querschnitt die von den beiden Schalen 331, 332 gebildeten, äusseren Wände 319 der Zuleitungen 315 sowie die ebenfalls von den beiden Schalen 331, 332 gebildete Gehäuse-Wand 327. Der Kühl-Mantel 370 ist aus zwei einstückigen, metallischen, beispielsweise aus rostfreien Stahl bestehenden, äusseren Schalen 371 und 372 gebildet. Jede dieser Schalen 371, 372 bildet in Querschnitten ungefähr eine Hälfte des Kühl-Mantels. Jede Schale 371, 372 hat beispielsweise analog wie die Schalen 31, 32 der Abgasvorrichtung 11 einen im Querschnitt gewölbten sowie lückenlos zusammenhängenden Hauptabschnitt und für jede Zuleitung einen mit dem Anschlussflansch 17 verbundenen, fingerförmigen Abschnitt, wobei diese fingerförmigen Abschnitte durch Zwischenräume voneinander getrennt sind. Der Anschlussflansch 317 ist zum Beispiel aus zwei ursprünglich separaten, ebenen, aneinander anliegenden, metallischen Platten gebildet und hat für jeden Abgasausgang des Motors ein beide Platten durchdringendes Loch. Die innere Wand 320, die äussere Wand 319 jeder Zuleitung 315 und die dieser Zuleitung zugeordneten, fingerförmigen Abschnitte der beiden Schalen 371, 372 ragen in ein Loch des Anschlussflanschs 317 hinein und sind innerhalb diesem alle durch eine Schweissverbindung dicht miteinander sowie mit dem Anschlussflansch 317 verbunden. Dabei verbindet diese Schweissverbindung oder Schweissnaht auch die beiden Platten des Anschlussflansches 317 miteinander. Die sich beim Kragen 327d der Gehäuse-Wand 327 befindende Enden der Schalen 371, 372 liegen an diesem Kragen an und sind dort durch eine einzige Schweissverbindung oder Schweissnaht dicht mit den Schalen 331, 332 der Gehäuse-Wand 327 und mit der Ableitung 351 verbunden. Die beiden Schalen 371, 372 des Kühl-Mantels haben bei ihren Längsrändern und bei den Zwischenräumen zwischen den fingerförmigen Abschnitten fest sowie dicht miteinander verbundene Randabschnitte, die beispielsweise ähnlich ausgebildet und miteinander verschweisst sind, wie die Randabschnitte 31d, 32d der Schalen 31, 32 des zuerst beschriebenen Ausführungsbeispiels. Der Kühl-Mantel 370 ist zwischen seinen fingerförmigen, mit dem Anschlussflansch 317 verschweissten Abschnitten und seinen sich beim Ausgang des Katalysators befindenden Ende durch einen Zwischenraum 373 von den beide Schalen 331, 332 getrennt. Der Zwischenraum 373 hat dabei einen die Gehäuse-Wand 327 im Querschnitt vollständig umschliessenden Bereich und mit diesem zusammenhängende Bereiche, die je eine der äusseren Wände 319 der Zuleitungen 315 im Querschnitt vollständig umschliessen. Der Kühl-Mantel 370 ist mit zwei Kühlmittel-Anschlüssen 374, 375 versehen, die in den Zwischenraum 373 mündenden Durchgänge haben. Der Anschluss 374 ist in der Nähe der höchsten Stelle des Zwischenraums 373, beispielsweise in der Nähe des mit den fingerförmigen Abschnitten verbundenen Endes des im Querschnitt zusammenhängenden Hauptabschnitts des Kühl-Mantels auf der oberen Seite von diesem angeordnet. Der Anschluss 375 ist beim Ausgang des Katalysators in der Nähe der tiefsten Stelle des Zwischenraums 373 angeordnet.

Soweit vorgängig nichts anderes geschrieben wurde, weist die Abgasvorrichtung 311 ähnliche Bestandteile auf, wie die vorher beschriebenen Abgasvorrichtungen.

Bei der Benutzung der Abgasvorrichtung 311 wird das Abgas ähnlich wie bei der in Fig. 9 dargestellten Abgasvorrichtung 211 im allgemeinen geneigt zur Abgas-Eintrittsfläche der Katalysatormittel in die Nähe dieser Abgas-Eintrittfläche geleitet. Ferner wird ein vorzugsweise flüssiges Kühlmittel in der durch Pfeile angedeuteter Weise beim Anschluss 374 in der Zwischenraum 373 hinein und beim Anschluss 375 wieder aus dem Zwischenraum 373 heraus geleitet. Dadurch werden die Temperaturen der Schalen 331, 332 sowie der Schalen 371, 372 des Kühl-Mantels und die Wärmeabgabe an die Umgebung der Abgasvorrichtung 311 beträchtlich reduziert. Da die beiden Schalen 331, 332 von der inneren Wände 320 der Zuleitungen, der Eingangs-Innenwand 341 und den Katalysatormitteln 335 im wesentlichen überall durch Gas oder ein wärmeisolierendes Material enthaltende Zwischenräume getrennt sind, werden die Katalystormittel und das beim Betrieb des Motors von diesem zu den Katalysatormitteln sowie durch diese hindurch strömende Abgas durch das Kühlmittel höchstens geringfügig abgekühlt. Die Kühlung der Abgasvorrichtung hat daher praktisch keinen negativen Einfluss auf die katalytische Behandlung des Abgases.

Die in Fig. 11 ersichtliche Abgasvorrichtung 411 besitzt Zuleitungen 415 mit einer äusseren Wand 419 sowie einer inneren Wand 420 und ein Gehäuse 425 mit einer (äusseren) Gehäuse-Wand 427. Die letztere hat einen Eingangsabschnitt 427a, Hauptabschnitt 427b und Ausgangsabschnitt 427c. Die äusseren Wände 419 der Zuleitungen 415 und die Gehäuse-Wand 427 sind wiederum durch zwei miteinander verschweisste Schalen 431 und 432 gebildet. Das Gehäuse 425 enthält eine Gehäuseund/oder Katalysator-Innenwand 440. Diese erstreckt sich annähernd über die ganze Länge des Gehäuses 425 und bildet eine als Abgas-Sammler und -Verteiler dienende Eingangs-Innenwand 440a, eine Haupt- und/oder Mittel-Innenwand 440b und eine Ausgangs-Innenwand 440c. Diese drei Innenwände 440a, 440b, 440c befinden sich in den im Querschnitt vom Eingangsabschnitt 427a bzw. vom Hauptabschnitt 427b bzw. vom Ausgangsabschnitt 427c der Gehäuse-Wand 427 umschlossenen Innenraumbereichen des Gehäuses. Die Haupt- und/oder Mittel-Innenwand 440b ist koaxial zum Hauptabschnitt 427b der Gehäuse-Wand 427, im allgemeinen zylindrisch sowie im Querschnitt beispielsweise ungefähr kreisförmig oder oval und umschliesst im Querschnitt Katalysatormittel 435 mit einem Katalysatorkörper 436. Zwischen der Mittel-Innenwand 440b und der Umfangsfläche des Katalysatorkörpers 436 ist eine deformierbare Zwischenlage 437 angeordnet. Die Katalysator-Innenwand 440 besteht zum Beispiel aus einem einstückigen Blechteil oder aus zwei miteinander verschweissten Blechteilen. Die Eingangs-Innenwand 440a und die Ausgangs-Innenwand 440c haben im allgemeinen ähnliche Formen wie die Eingangs-Innenwand 41 bzw. die Ausgangs-Innenwand 49 der Vorrichtung 11. Die Katalysator-Innenwand 440 und die durch einen Abschnitt von dieser gebildete Eingangs-Innenwand 440a haben jedoch beispielsweise keine mit den Schalen der Gehäuse-Wand verschweissten Randabschnitte und sind zum Beispiel nur durch die zum Halten einer Lambdasonde 456 dienende Buchse 455 starr mit den Schalen der Gehäuse-Wand 427 verbunden. Die Gehäuse- und/oder Katalysator-Innenwand 440 hat jedoch mindestens einen durch eine nach aussen ragende Sicke gebildeten Vorsprung, wobei als Beispiel zwei ringförmige, entlang dem Umfang der Gehäuse- und/oder Katalysator-Innenwand 440 verlaufende Vorsprünge 440d und 440e gezeichnet sind. Der Vorsprung 440d befindet sich in der Haupt- und/oder Mittel-Innenwand 440b in der Nähe von deren sich stromaufwärts befindendem Ende. Der Vorsprung 440e ist in der Nähe des sich stromabwärts befindenden Endes der Gehäuse-Wand 427 angeordnet. Die Innenwand 440 wird durch die Vorsprünge 440d, 440e - beispielsweise mit etwas Spiel - zentriert. Der Vorsprung 440d ragt zum Beispiel zwischen zwei nicht gezeichnete, nach innen vorstehende, aus Sicken gebildete Vorsprünge des Hauptabschnitts 427b der Gehäuse-Wand 427 hinein und wird dadurch ein wenig axial verschiebbar oder annähernd unverschiebbar im Gehäuse gehalten. Der Vorsprung 440e kann sich dagegen frei axial verschieben.

Die inneren Wände 420 der Zuleitungen 415 sind zum Beispiel ähnlich verschiebbar mit der Eingangs-Innenwand 440a verbunden, wie die inneren Wände 20 der Vorrichtung 11 mit der Eingangs-Innenwand 41. Abhängig von den Formen der inneren Wände 420 der Zuleitungen und der Verbindungsstelle der inneren Wände 420 mit der Eingangs-Innenwand kann jedoch vielleicht mindestens eine der Wände 420 mit der Eingangs-Innenwand 440a verschweisst sein. Eventuell können sogar alle inneren Wände 420 mit der Eingangs-Innenwand 440a verschweisst sein. Zwischen den Innenflächen der von den miteinander verschweissten Schalen 431, 432 gebildeten äusseren Wänden 419 der Zuleitungen und inneren Wänden von diesen ist wiederum ein Zwischenraum 461 vorhanden. Die Gehäuse-Wand 427 und die Gehäuse und/oder Katalysator-Innenwand 440 sind im wesentlichen - d. h. abgesehen von den Vorsprüngen 440d, 440e und der Buchse 455 - ebenfalls durch einen freien Zwischenraum 462 getrennt. Dieser hängt bei der Eingangs-Innenwand 440a mit dem Zwischenraum 461 zusammen und erstreckt sich bis mindestens annähernd zum sich stromabwärts befindenden Ende der Gehäuse-Wand 427 d.h. ungefähr bis zum Vorsprung 440e. Der zwischen dem Hauptabschnitt 427b der Gehäuse-Wand 427 und dem Mittelabschnitt 440b der Katalysator-Innenwand 440 vorhandene Bereich des Zwischenraums 462 ergibt eine zusätzliche Wärmeisolation der Katalysatormittel. Wenn beim Betrieb heisses Abgas in Kontakt mit den inneren Wänden 420 der Zuleitungen sowie mit der Gehäuse- und/oder Katalysator-Innenwand 440 gelangt, können sich die Wände 420, 440 in allen Richtungen ausdehnen, ohne dass übermässige Spannungen entstehen, die Risse oder Brüche verursachen könnten. Soweit vorgängig nicht anders geschrieben wurde, kann die Vorrichtung 411 ähnlich wie die Vorrichtung 11 ausgebildet sein.

Die Abgasvorrichtungen und deren Herstellung können noch auf andere Weisen modifiziert werden und können beispielsweise nur zwei oder mehr als vier Zuleitungen aufweisen. Ferner können Merkmale von verschiedenen anhand der Figuren beschriebenen Varianten kombiniert werden. Die in den Figuren 1 bis 9 und 11 gezeichneten Abgasvorrichtungen können beispielsweise ebenfalls mit einen aus zwei Platten zusammengesetzten Anschlussflansch und/oder zusätzlich mit einem Kühl-Mantel versehen werden. Des weiteren könnte der für alle Zuleitungen gemeinsame Anschlussflansch 17 bzw. 317 durch mehrere, je nur einer einzigen Zuleitung oder nur einigen der Zuleitungen zugeordnete, separate Flansche ersetzt werden. Die inneren Wände der Zuleitungen können eventuell zusammen aus zwei durch Tiefziehen geformten Schalen gebildet sein, von denen jede ungefähr die Hälfte einer inneren Wand bildet. Die Eingangs-Innenwand 41, 241, 341 kann statt aus zwei Schalen aus einem einstückigen Blechteil gebildet werden. Umgekehrt kann die Ausgangs-Innenwand 49 bzw. 349 statt aus einem einstückigen Blechteil aus zwei miteinander verschweissten Schalen gebildet werden. Die trichterförmige Ausgangs-Innenwand 49, 349 könnte statt über die Ableitung 51 bzw. 251, bwz. 351 oder zusätzlich durch eine Schweissverbindung direkt mit den Schalen 31, 32, bzw. 331, 332 und eventuell 371, 372 verbunden sein.

Des weiteren könnten die Katalysatormittel statt nur eines einzigen Katalysatorkörpers beispielsweise zwei in der Strömungsrichtung nacheinander angeordnete Katalysatorkörper aufweisen. Ferner könnte der bzw. jeder Katalysatorkörper aus aufgewickelten oder aufeinander geschichteten, mit Überzügen versehenen Blechelementen gebildet sein.

## Patentansprüche

1. Abgasvorrichtung für einen Verbrennungsmotor (1, 201, 301), mit einem Katalysatormittel (35, 235, 335, 435) aufweisenden Katalysator (13, 213, 313), mindestens zwei Zuleitungen (15, 115, 215, 315, 415) zum Verbinden des Verbrennungsmotors (1, 201, 301) mit dem Katalysator (13, 213, 313) und zwei aus Blechteilen geformten, miteinander verbundenen Schalen (31, 32, 331, 332, 431, 432), die zusammen Wände (19, 319, 419) der Zuleitungen (15, 115, 215, 315, 415) und eine die Katalysatormittel (35, 235, 335, 435) im Querschnitt umschliessende Gehäuse-Wand (27, 227, 327, 427) bilden, **dadurch gekennzeichnet, dass** jede Zuleitung (15, 115, 215, 315, 415) eine innere Wand (20, 320, 420) aufweist, die im Querschnitt von den Schalen (31, 32, 331, 332, 431, 432) umschlossen ist und einen Durchgang für das Abgas begrenzt, dass die Schalen (31, 32, 331, 332, 431, 432) im Querschnitt zusammen eine Eingangs-Innenwand (41, 241, 341, 440a) umschliessen, die ein Ende hat und einen von diesem weg bis mindestens annähernd zu den Katalysatormitteln (35, 235, 335, 435) verlaufenden Innenraumbereich und/oder Durchgang für das Abgas begrenzt, dass die von den inneren Wänden (20, 320, 420) aller Zuleitungen (15, 215, 315, 415) begrenzten Durchgänge beim genannten Ende der Eingangs-Innenwand (41, 341, 440a) in den von dieser begrenzten Innenraumbereich und/oder Durchgang münden, dass die innere Wand (20, 320) mindestens einer Zuleitung (15, 115, 215, 315, 415) verschiebbar mit der Eingangs-Innenwand (41, 341, 440a) verbunden ist und dass die inneren Wände (20, 320, 420) der Zuleitungen (15, 115, 215, 315, 415) sowie die Eingangs-Innenwand (41, 241, 341, 440a) im Wesentlichen durch einen freien Zwischenraum (61, 461) von den Schalen (31, 32, 331, 332, 431, 432) getrennt sind.

2. Vorrichtung nach Anspruch 1, **dadurch gekennzeichnet, dass** die zwei Schalen (31, 32, 331, 332, 431, 432) miteinander verschweisst sind.

3. Vorrichtung nach Anspruch 1 oder 2, **dadurch gekennzeichnet, dass** jede Schale (31, 32, 331, 332, 431, 432) für jede Zuleitung (15, 115, 215, 315, 415) einen fingerförmigen Abschnitt (31b, 32b) aufweist und dass Zwischenräume zwischen den zur gleichen Schale (31, 32, 331, 332, 431, 432) gehörenden, fingerförmigen Abschnitten (31b, 32b) vorhanden sind.

4. Vorrichtung nach einem der Ansprüche 1 bis 3, **dadurch gekennzeichnet, dass** der zwischen den Schalen (31, 32, 331, 332, 431, 432) und der inneren Wand (20, 320) der Zuleitungen (15, 115, 215, 315, 415) sowie der Eingangs-Innenwand (41, 241, 341, 440a) vorhandene Zwischenraum (61, 461) im Wesentlichen stillstehende Luft und/oder im Wesentlichen stillstehendes Abgas enthält.

5. Vorrichtung nach einem der Ansprüche 1 bis 4, **dadurch gekennzeichnet, dass** der von der Eingangs-Innenwand (41, 341, 440a) begrenzte Innenraumbereich und/oder Durchgang sich mindestens teilweise vom genannten Ende der Eingangs-Innenwand (41, 241, 341, 440a) zu den Katalysatormitteln (35, 235, 335, 435) hin erweitert.

6. Vorrichtung nach einem der Anspruche 1 bis 5, **dadurch gekennzeichnet, dass** die Eingangs-Innenwand (41, 241, 341, 440a) bei mindestens einer Stelle starr mit der von den zwei Schalen (31, 32, 331, 332) gebildeten Gehäuse-Wand (27, 227, 327, 427) verbunden ist und dass die innere Wand (20, 320) jeder Zuleitung (15, 115, 215, 315, 415) verschiebbar mit der Eingangs-Innenwand (41, 341, 440a) verbunden ist.

7. Vorrichtung nach einem der Ansprüche 1 bis 6, **dadurch gekennzeichnet, dass** die inneren Wände (20, 320, 420) der Zuleitungen (15, 115, 215, 415) verschiebbar in eine Eintrittsöffnung (41a, 341a) der Eingangs-Innenwand (41, 241, 341, 440a) hineinragen.

8. Vorrichtung nach einem der Ansprüche 1 bis 7, **dadurch gekennzeichnet, dass** die Zuleitungen (15, 115, 415) und ihre inneren Wände (20, 420) mindestens teil- und stellenweise gebogen sind und dass die inneren Wände (20, 420) aller Zuleitungen (15, 115, 415) verschiebbar in eine für alle Zuleitungen (15, 115, 415) gemeinsame Eintrittsöffnung (41a) der Eingangs-Innenwand (41, 241, 440a) hineinragen.

9. Abgasvorrichtung nach einem der Ansprüche 1 bis 8, **dadurch gekennzeichnet, dass** die beiden Schalen (331, 332) im Querschnitt von zwei zusätzlichen, äusseren Schalen (371, 372) umschlossen sind, die zusammen mit den erstgenannten Schalen (331, 332) einen Zwischenraum (373) zum Hindurchleiten eines Kühlmittels begrenzen.

10. Vorrichtung nach einem der Ansprüche 1 bis 9, **dadurch gekennzeichnet, dass** die inneren Wände (20, 320, 420) jeder Zuleitung (15, 115, 215, 315, 415) bei einem zum Verbinden mit dem Verbrennungsmotor (1, 201, 301) bestimmten Ende der betreffenden Zuleitung (15, 115, 215, 315, 415) starr und dicht mit den Schalen (31, 32, 331, 332, 431, 432) verbunden, beispielsweise mit diesen und mit einem Flansch (17, 317) verschweisst, sind.

11. Abgasvorrichtung nach einem der Ansprüche 1 bis 10, **dadurch gekennzeichnet, dass** eine Lambdasonde (56, 456) vorhanden ist, die durch die Gehäuse-Wand (27, 227, 327, 427) und die Eingangs-Innenwand (41, 241, 341, 440a) hindurch in den von der letzteren umschlossenen Innenraumbereich und/oder Durchgang ragt.

12. Abgasvorrichtung nach Anspruch 11, **dadurch gekennzeichnet, dass** die Lambdasonde (56, 456) in einer Buchse (55, 455) gehalten ist, die dicht sowie starr mit der Gehäuse-Wand (27, 427) und der Eingangs-Innenwand (41, 440a) verbunden ist.

13. Abgasvorrichtung nach Anspruch 12, **dadurch gekennzeichnet, dass** die Eingangs-Innenwand (440a) ausschliesslich bei der Lambdasonde (456) durch die diese haltende Buchse (455) starr mit der von den beiden Schalen (431, 432) gebildeten Gehäuse-Wand (427) verbunden ist.

14. Abgasvorrichtung nach einem der Ansprüche 1 bis 13, **dadurch gekennzeichnet, dass** die Eingangs-Innenwand (440a) mit mindestens einem nach aussen ragenden Vorsprung (440d, 440e) verbunden und/oder versehen ist, der die Eingangs-Innenwand (440a) in der Gehäuse-Wand (427a) zentriert und vorzugsweise bezüglich dieser verschiebbar ist.

15. Abgasvorrichtung nach einem der Ansprüche 1 bis 12, **dadurch gekennzeichnet, dass** die Eingangs-Innenwand (41) aus zwei Blechteilen besteht, die miteinander und mit den die Gehäuse-Wand (27) bildenden Schalen (31, 32) verschweisste Randabschnitte (43b, 44b) aufweisen.

16. Abgasvorrichtung nach einem der Ansprüche 1 bis 15, **dadurch gekennzeichnet, dass** jede der beiden Schalen (31, 32, 331, 332, 431, 432) einstückig ist.

17. Abgasvorrichtung nach einem der Ansprüche 1 bis 16, **dadurch gekennzeichnet, dass** jede der beiden Schalen (31, 32, 331, 332, 431, 432) in Querschnitten einen Abschnitt, beispielsweise ungefähr eine Hälfte, der Wände (19, 319, 419) der Zuleitungen (15, 115, 215, 315, 415) und einen Abschnitt, beispielsweise ungefähr eine Hälfte, der Gehäuse-Wand (27, 227, 327, 427) bildet.

18. Abgasvorrichtung nach einem der Ansprüche 1 bis 17, **dadurch gekennzeichnet, dass** eine wärmeisolierende deformierbare Zwischenlage (37, 437) zwischen den Katalysatormitteln (35, 235, 335, 435) und der von den Schalen (31, 32, 331, 332, 431, 432) gebildeten Gehäuse-Wand (27, 227, 327, 427) angeordnet ist und/oder dass eine Mittel-Innenwand (440b) die Katalysatormittel (435) im Querschnitt umschliesst und durch einen freien, im Wesentlichen stillstehende Luft und/oder im Wesentlichen stillstehendes Abgas enthaltenden Zwischenraum (462) von der von den Schalen (431, 432) gebildeten Gehäuse-Wand (427) getrennt ist und dass eine Ausgangs-Innenwand (49, 349) stromabwärts von den Katalysatormitteln (35, 235, 335, 435) angeordnet, im Querschnitt von der von den beiden Schalen (31, 32, 331, 332, 431, 432) gebildeten Gehäuse-Wand (27, 227, 327, 427) umschlossen, zum grössten Teil durch einen freien im Wesentlichen stillstehende Luft und/oder stillstehendes Abgas enthaltenden Zwischenraum (62) von der Gehäuse-Wand (27, 227, 327, 427) getrennt ist und einen sich von den Katalysatormitteln (35, 235, 335, 435) weg verjüngenden Innenraumbereich und/oder Durchgang für das Abgas begrenzt.

## Claims

1. Exhaust device for an internal combustion engine (1, 201, 301), comprising a catalytic converter (13, 213, 313) having catalyst means (35, 235, 335, 435), at least two feed pipes (15, 115, 215, 315, 415) for connecting the internal combustion engine (1, 201, 301) to the catalytic converter (13, 213, 313) and two shells (31, 32, 331, 332, 431, 432) which are formed from sheet metal parts, are connected to one another and together form walls (19, 319, 419) of the feed pipes (15, 115, 215, 315, 415) and a housing wall (27, 227, 327, 427) enclosing the catalyst means (35, 235, 335, 435) in cross-section, **characterized in that** each feed pipe (15, 115, 215, 315, 415) has an inner wall (20, 320, 420) which, in cross-section, is enclosed by the shells (31, 32, 331, 332, 431, 432) and bounds a passage for the exhaust gas, that the shells (31, 32, 331, 332, 431, 432) together enclose in cross-section an inlet inner wall (41, 241, 341, 440a) which has an end and bounds an interior region and/or passage for the exhaust gas, which region and/or which passage runs away from said end at least almost to the catalyst means (35, 235, 335, 435), that the passages bounded by the inner walls (20, 320, 420) of all feed pipes (15, 215, 315, 415) open at said end of the inlet inner wall (41, 341, 440a) into the interior region and/or passage bounded by said inlet inner wall, that the inner wall (20, 320) of at least one feed pipe (15, 115, 215, 315, 415) is displaceably connected to the inlet inner wall (41, 341, 440a) and that the inner walls (20, 320, 420) of the feed pipes (15, 115, 215, 315, 415) and the inlet inner wall (41, 241, 341, 440a) are separated essentially by a free intermediate space (61, 461) from the shells (31, 32, 331, 332, 431, 432).

2. Device according to Claim 1, **characterized in that** the two shells (31, 32, 331, 332, 431, 432) are welded to one another.

3. Device according to Claim 1 or 2, **characterized in that** each shell (31, 32, 331, 332, 431, 432) for each feed pipe (15, 115, 215, 315, 415) has a finger-like section (31b, 32b) and that intermediate spaces are present between the finger-like sections (31b, 32b) belonging to the same shell (31, 32, 331, 332, 431, 432).

4. Device according to any of Claims 1 to 3, **characterized in that** the intermediate space (61, 461) present between the shells (31, 32, 331, 332, 431, 432) and the inner wall (20, 320) of the feed pipes (15, 115, 215, 315, 415) and the inlet inner wall (41, 241, 341, 440a) contains essentially stationary air and/or essentially stationary exhaust gas.

5. Device according to any of Claims 1 to 4, **characterized in that** the interior region and/or passage bounded by the inlet inner wall (41, 341, 440a) widens at least partly from said end of the inlet inner wall (41, 241, 341, 440a) to the catalyst means (35, 235, 335, 435).

6. Device according to any of Claims 1 to 5, **characterized in that** the inlet inner wall (41, 241, 341, 440a) is rigidly connected to the housing wall (27, 227, 327, 427) formed by the two shells (31, 32, 331, 332) at at least one point, and that the inner wall (20, 320) of each feed pipe (15, 115, 215, 315, 415) is displaceably connected to the inlet inner wall (41, 341, 440a).

7. Device according to any of Claims 1 to 6, **characterized in that** the inner walls (20, 320, 420) of the feed pipes (15, 115, 215, 415) project displaceably into an inlet orifice (41a, 341a) of the inlet inner wall (41, 241, 341, 440a).

8. Device according to any of Claims 1 to 7, **characterized in that** the feed pipes (15, 115, 415) and their inner walls (20, 420) are bent at least partly and at points and that the inner walls (20, 420) of all feed pipes (15, 115, 415) project displaceably into an inlet orifice (41a) of the inlet inner wall (41, 241, 440a), which inlet orifice is common to all feed pipes (15, 115, 415).

9. Exhaust device according to any of Claims 1 to 8, **characterized in that** the two shells (331, 332) are enclosed in cross-section by two additional, outer shells (371, 372) which, together with the first-mentioned shells (331, 332), bound an intermediate space (373) for passing a coolant through.

10. Device according to any of Claims 1 to 9, **characterized in that** the inner walls (20, 320, 420) of each feed pipe (15, 115, 215, 315, 415) are rigidly and tightly connected to the shells (31, 32, 331, 332, 431, 432), for example welded to said shells and to a flange (17, 317), at an end of the relevant feed pipe (15, 115, 215, 315, 415) which is intended for connection to the internal combustion engine (1, 201, 301).

11. Exhaust device according to any of Claims 1 to 10, **characterized in that** a lambda probe (56, 456) is present, which projects through the housing wall (27, 227, 327, 427) and the inlet inner wall (41, 241, 341, 440a) into the interior region and/or passage enclosed by the latter.

12. Exhaust device according to Claim 11, **characterized in that** the lambda probe (56, 456) is held in a bush (55, 455) which is tightly and rigidly connected to the housing wall (27, 427) and the inlet inner wall (41, 440a).

13. Exhaust device according to Claim 12, **characterized in that** the inlet inner wall (400a) is rigidly connected, exclusively at the lambda probe (456), by the bush (455) holding said probe, to the housing wall (427) formed by the two shells (431, 432).

14. Exhaust device according to any of Claims 1 to 13, **characterized in that** the inlet inner wall (440a) is connected to and/or provided with at least one outward projection (440d, 440e) which centres the inlet inner wall (440a) in the housing wall (427a) and is preferably displaceable relative to this.

15. Exhaust device according to any of Claims 1 to 12, **characterized in that** the inlet inner wall (41) consists of two sheet metal parts which have edge sections (43b, 44b) welded to one another and to the shells (31, 32) forming the housing wall (27).

16. Exhaust device according to any of Claims 1 to 15, **characterized in that** each of the two shells (31, 32, 331, 332, 431, 432) is integral.

17. Exhaust device according to any of Claims 1 to 16, **characterized in that** each of the two shells (31, 32, 331, 332, 431, 432) forms, in cross-sections, a section, for example approximately a half, of the walls (19, 319, 419) of the feed pipes (15, 115, 215, 315, 415) and a section, for example approximately a half, of the housing wall (27, 227, 327, 427).

18. Exhaust device according to any of Claims 1 to 17, **characterized in that** a heat-insulating deformable intermediate layer (37, 437) is arranged between the catalyst means (35, 235, 335, 435) and the housing wall (27, 227, 327, 427) formed by the shells (31, 32, 331, 332, 431, 432) and/or that a middle inner wall (440b) encloses the catalyst means (435) in cross-section and is separated from the housing wall (427) formed by the shells (431, 432) by a free intermediate space (462) containing essentially stationary air and/or essentially stationary exhaust gas, and that an outlet inner wall (49, 349) is arranged downstream of the catalyst means (35, 235, 335, 435), enclosed in cross-section by the housing wall (27, 227, 327, 427) formed by the two shells (31, 32, 331, 332, 431, 432), and for the most part separated from the housing wall (27, 227, 327, 427) by a free intermediate space (62) containing essentially stationary air and/or essentially stationary exhaust gas, and said outlet inner wall bounds an interior region and/or passage for the exhaust gas which tapers away from the catalyst means (35, 235, 335, 435).

## Revendications

1. Dispositif d'échappement pour un moteur à combustion interne (1, 201, 301), comprenant un catalyseur (13, 213, 313) muni de moyens catalytiques (35, 235, 335, 435) ; au moins deux conduits d'amenée (15, 115, 215, 315, 415) pour relier le moteur à combustion interne (1, 201, 301) au catalyseur (13, 213, 313) ; et deux coquilles (31, 32, 331, 332, 431, 432) reliées l'une à l'autre, constituées par des pièces en tôle et formant, associativement, des parois (19, 319, 419) des conduits d'amenée (15, 115, 215, 315, 415) et une paroi de carter (27, 227, 327, 427) ceinturant les moyens catalytiques (35, 235, 335, 435) en coupe transversale, **caractérisé par le fait que** chaque conduit d'amenée (15, 115, 215, 315, 415) possède une paroi intérieure (20, 320, 420) qui est ceinturée par les coquilles (31, 32, 331, 332, 431, 432), en coupe transversale, et délimite un passage affecté aux gaz d'échappement ; **par le fait que** les coquilles (31, 32, 331, 332, 431, 432) entourent conjointement, en coupe transversale, une paroi intérieure d'entrée (41, 241, 341, 440a) pourvue d'une extrémité et délimitant une zone d'espace intérieur et/ou un passage affecté aux gaz d'échappement, partant de ladite extrémité et s'étendant au moins jusqu'à proximité des moyens catalytiques (35, 235, 335, 435); **par le fait que** les passages délimités par les parois intérieures (20, 320, 420) de tous les conduits d'amenée (15, 215, 315, 415) débouchent, au niveau de l'extrémité précitée de la paroi intérieure d'entrée (41, 341, 440a), dans la zone d'espace intérieur et/ou dans le passage délimité(e) par ladite paroi ; **par le fait que** la paroi intérieure (20, 320) d'au moins un conduit d'amenée (15, 115, 215, 315, 415) est reliée de manière coulissante à la paroi intérieure d'entrée (41, 341, 440a) ; et **par le fait que** les parois intérieures (20, 320, 420) des conduits d'amenée (15, 115, 215, 315, 415), ainsi que la paroi intérieure d'entrée (41, 241, 341, 440a), sont sensiblement séparées d'avec les coquilles (31, 32, 331, 332, 431, 432) par un espace intermédiaire libre (61, 461).

2. Dispositif selon la revendication 1, **caractérisé par le fait que** les deux coquilles (31, 32, 331, 332, 431, 432) sont soudées l'une à l'autre.

3. Dispositif selon la revendication 1 ou 2, **caractérisé par le fait que** chaque coquille (31, 32, 331, 332, 431, 432) comporte un tronçon (31b, 32b) en forme de doigt, destiné à chaque conduit d'amenée (15, 115, 215, 315, 415) ; et **par le fait que** des espaces intercalaires sont présents entre les tronçons (31b, 32b), en forme de doigt, faisant partie de la même coquille (31, 32, 331, 332, 431, 432).

4. Dispositif selon l'une des revendications 1 à 3, **caractérisé par le fait que** l'espace intermédiaire (61, 461), présent entre les coquilles (31, 32, 331, 332, 431, 432) et la paroi intérieure (20, 320) des conduits d'amenée (15, 115, 215, 315, 415), ainsi que la paroi intérieure d'entrée (41, 241, 341, 440a), renferme de l'air sensiblement stagnant et/ou des gaz d'échappement sensiblement stagnants.

5. Dispositif selon l'une des revendications 1 à 4, **caractérisé par le fait que** la zone d'espace intérieur et/ou le passage, délimité(e) par la paroi intérieure d'entrée (41, 341, 440a), s'évase au moins partiellement depuis l'extrémité précitée de ladite paroi intérieure d'entrée (41, 241, 341, 440a) jusqu'aux moyens catalytiques (35, 235, 335, 435).

6. Dispositif selon l'une des revendications 1 à 5, **caractérisé par le fait que** la paroi intérieure d'entrée (41, 241, 341, 440a) est reliée rigidement, dans au moins une zone, à la paroi de carter (27, 227, 327, 427) formée par les deux coquilles (31, 32, 331, 332) ; et **par le fait que** la paroi intérieure (20, 320) de chaque conduit d'amenée (15, 115, 215, 315, 415) est reliée de manière coulissante à ladite paroi intérieure d'entrée (41, 341, 440a).

7. Dispositif selon l'une des revendications 1 à 6, **caractérisé par le fait que** les parois intérieures (20, 320, 420) des conduits d'amenée (15, 115, 215, 415) pénètrent, de manière coulissante, dans un orifice d'entrée (41a, 341a) de la paroi intérieure d'entrée (41, 241, 341, 440a).

8. Dispositif selon l'une des revendications 1 à 7, **caractérisé par le fait que** les conduits d'amenée (15, 115, 415), et leurs parois intérieures (20, 420), sont cintrés au moins partiellement et au moins par zones ; et **par le fait que** les parois intérieures (20, 420) de tous les conduits d'amenée (15, 115, 415) pénètrent, de manière coulissante, dans un orifice d'entrée (41a) de la paroi intérieure d'entrée (41, 241, 440a) qui est commun à tous lesdits conduits d'amenée (15, 115, 415).

9. Dispositif d'échappement selon l'une des revendications 1 à 8, **caractérisé par le fait que** les deux coquilles (331, 332) sont ceinturées, en coupe transversale, par deux coquilles extérieures additionnelles (371, 372) qui délimitent, conjointement aux coquilles (331, 332) mentionnées en premier lieu, un espace intermédiaire (373) destiné à la circulation traversante d'un agent de refroidissement.

10. Dispositif selon l'une des revendications 1 à 9, **caractérisé par le fait que** les parois intérieures (20, 320, 420) de chaque conduit d'amenée (15, 115, 215, 315, 415) sont reliées aux coquilles (31, 32, 331, 332, 431, 432) de façon rigide et étanche, en étant par exemple soudées à ces dernières, et à une bride (17, 317), au niveau d'une extrémité du conduit d'amenée considéré (15, 115, 215, 315, 415) qui est destinée à la liaison avec le moteur à combustion inteme (1, 201, 301).

11. Dispositif d'échappement selon l'une des revendications 1 à 10, **caractérisé par** la présence d'une sonde lambda (56, 456) pénétrant, en traversant la paroi de carter (27, 227, 327, 427) et la paroi intérieure d'entrée (41, 241, 341, 440a), dans la zone d'espace intérieur et/ou dans le passage ceinturé(e) par ladite paroi intérieure.

12. Dispositif d'échappement selon la revendication 11, **caractérisé par le fait que** la sonde lambda (56, 456) est retenue dans une douille (55, 455) reliée, à la fois de manière étanche et rigide, à la paroi de carter (27, 427) et à la paroi intérieure d'entrée (41, 440a).

13. Dispositif d'échappement selon la revendication 12, **caractérisé par le fait que** la paroi intérieure d'entrée (440a) est reliée de façon rigide exclusivement au niveau de la sonde lambda (456), par l'intermédiaire de la douille (455) retenant ladite sonde, à la paroi de carter (427) formée par les deux coquilles (431, 432).

14. Dispositif d'échappement selon l'une des revendications 1 à 13, **caractérisé par le fait que** la paroi intérieure d'entrée (440a) est solidaire et/ou munie d'au moins une protubérance (440d, 440e) faisant saillie vers l'extérieur, assurant le centrage de ladite paroi intérieure d'entrée (440a) dans la paroi de carter (427a), et pouvant préférentiellement coulisser par rapport à cette dernière.

15. Dispositif d'échappement selon l'une des revendications 1 à 12, **caractérisé par le fait que** la paroi intérieure d'entrée (41) est composée de deux pièces en tôle pourvues de segments marginaux (43b, 44b) soudés l'un à l'autre et aux coquilles (31, 32) formant la paroi de carter (27).

16. Dispositif d'échappement selon l'une des revendications 1 à 15, **caractérisé par le fait que** chacune des deux coquilles (31, 32, 331, 332, 431, 432) est monobloc.

17. Dispositif d'échappement selon l'une des revendications 1 à 16, **caractérisé par le fait que** chacune des deux coquilles (31, 32, 331, 332, 431, 432) forme, en coupes transversales, une région, par exemple approximativement une moitié des parois (19, 319, 419) des conduits d'amenée (15, 115, 215, 315, 415) et une région, par exemple approximativement une moitié de la paroi de carter (27, 227, 327, 427).

18. Dispositif d'échappement selon l'une des revendications 1 à 17, **caractérisé par le fait qu'**une couche intercalaire déformable (37, 437), thermiquement isolante, est interposée entre les moyens catalytiques (35, 235, 335, 435) et la paroi de carter (27, 227, 327, 427) formée par les coquilles (31, 32, 331, 332, 431, 432) ; et/ou **par le fait qu'**une paroi intérieure médiane (440b) ceinture les moyens catalytiques (435) en coupe transversale et est séparée, par un espace intermédiaire libre (462) renfermant de l'air sensiblement stagnant et/ou des gaz d'échappement sensiblement stagnants, d'avec la paroi de carter (427) formée par les coquilles (431, 432) ; et **par le fait qu'**une paroi intérieure de sortie (49, 349) est implantée en aval des moyens catalytiques (35, 235, 335, 435), est ceinturée en coupe transversale par la paroi de carter (27, 227, 327, 427) formée par les deux coquilles (31, 32, 331, 332, 431, 432), est en majeure partie séparée d'avec ladite paroi de carter (27, 227, 327, 427) par un espace intermédiaire libre (62) renfermant de l'air sensiblement stagnant et/ou des gaz d'échappement sensiblement stagnants, et délimite une zone d'espace intérieur et/ou un passage affecté aux gaz d'échappement, se rétrécissant en s'éloignant desdits moyens catalytiques (35, 235, 335, 435).
